# EUROPEAN PATENT APPLICATION

(11) **EP 4 645 086 A1**
(43) Date of publication of application: **05.11.2025**
(21) Application number: 23911258.4
(22) Date of filing: 29.08.2023
(51) Int. Cl.: G06F 11/07, H04R 3/00

(54) **AUDIO SYSTEM, AUDIO DEVICE, WIRELESS TERMINAL, SOLUTION PROVISION SERVER, PROGRAM, AND SOLUTION SUGGESTION METHOD FOR ERRORS AT AUDIO DEVICE**

(30) Priority: 26.12.2022 JP 2022209085
(71) Applicant: D&M Holdings Inc., Kawasaki-shi Kanagawa 210-8569 (JP)
(72) Inventor: MAGAMI Yu, Kawasaki-shi, Kanagawa 210-8569 (JP)
(74) Representative: Mewburn Ellis LLP
(86) International application number: PCT/JP2023/031121
(87) International publication number: WO 2024/142474

(57) **Abstract**

[Problem] To provide a technology that makes it possible to suggest appropriate solutions to errors associated with the forced shutdown of an audio device. [Solution] Upon detecting an error caused by a forced shutdown, a wireless speaker 1-1-1-n switches a power supply supply source from a principal power supply to a backup power supply, transmits an error report that includes error details for the detected error, a model name, and version information for installed software to a wireless terminal 2, and shuts down. The wireless terminal 2 forwards the error report received from the wireless speaker 1-1-1-n to a solution provision server 4, receives a solution from the solution provision server 4, and presents the solution. The solution provision server 4 finds a solution that corresponds to the error details included in the error report received from the wireless terminal 2 from a table associated with the model name and the version information for the installed software included in the error report and transmits the solution found to the wireless terminal 2.

## Description

### Technical Field

The present invention relates to a technology for suggesting a solution to an error involving a forced shutdown of an audio device such as a wireless speaker.

### Background Art

In Patent Literature 1, there is disclosed a wireless speaker system which reproduces audio data by two or more wireless speakers. In this wireless speaker system, one of a plurality of wireless speakers belonging to the same group serves as a master (group leader) to download audio data from a media server and reproduce and output the audio data and to transmit the reproduced data to each of the other wireless speakers (slaves) belonging to the same group and cause those speakers to output the reproduced data as well. This enables the reproduction of the same audio data from a plurality of wireless speakers belonging to the same group.

### Citation List

### Patent Literature

[PTL 1] US 7987294 B2

### Summary of Invention

### Technical Problem

Audio devices such as wireless speakers may be forced to shut down due to a fatal error. In this case, the cause of the error is unknowable to the user. Without knowing the cause of the error, and only seeing the end result of a forced shutdown, it is difficult to identify an appropriate solution by looking through an instruction manual or searching the Internet. For example, the cause of the error causing the forced shutdown may vary depending on the model of the audio device or the version of software installed on the audio device, and the solution may also vary. For this reason, it is very complicated for users to identify a solution by themselves.

The present invention has been made in view of the above-mentioned circumstances, and has an object to provide a technology with which an appropriate solution to an error involving a forced shutdown of an audio device can be suggested.

### Solution to Problem

In order to solve the above-mentioned problem, an audio system of the present invention includes an audio device such as a wireless speaker, a wireless terminal which functions as a remote controller for the audio device, and a solution providing server which provides a solution to an error with the audio device.

The audio device monitors for the occurrence of errors, and when the audio device detects an error which causes a forced shutdown, the audio device switches a power supply source from a main power supply (for example, external power supply) to a backup power supply, transmits to the wireless terminal an error report containing an error detail of the detected error, a model name of the audio device, and version information of installed software of the audio device, and then shuts down.

When the wireless terminal receives the error report from the audio device, the wireless terminal transfers the received error report to the solution providing server. Then, the wireless terminal receives a solution from the solution providing server, and presents the received solution to a user.

When the solution providing server receives the error report from the wireless terminal, the solution providing server finds the solution for the error detail contained in the error report from a table linked to the model name and the version information of installed software contained in the error report, and then transmits the found solution to the wireless terminal.

For example, according to one embodiment of the present invention, there is provided an audio system including: an audio device; a wireless terminal configured to function as a remote controller for the audio device; and a solution providing server configured to provide a solution to an error with the audio device, wherein the audio device includes: a main power supply; a backup power supply; error monitoring means for monitoring for an error which causes a forced shutdown of the audio device; and error reporting means for transmitting, when the error is detected by the error monitoring means, an error report containing an error detail of the error, a model name of the audio device, and version information of installed software of the audio device to the wireless terminal, wherein the error monitoring means is configured to switch, when the error is detected, a power supply source of the audio device from the main power supply to the backup power supply, to notify the error reporting means of the error detail of the error, and shut down the audio device after transmission of the error report by the error reporting means is complete, wherein the wireless terminal includes: error report transfer means for transferring the error report to the solution providing server when the error report is received from the audio device; and solution presentation means for presenting, when a solution is received from the solution providing server, the solution, and wherein the solution providing server includes: solution storage means for storing a table that stores, for each model name and piece of version information of installed software of the audio device, a solution to each anticipated error detail; solution finding means for finding, when the error report is received from the wireless terminal, the solution for the error detail contained in the error report from the table which is stored in the solution storage means linked to the model name and the version information of the installed software contained in the error report; and solution transmission means for transmitting the solution found by the solution finding means to the wireless terminal.

### Advantageous Effects of Invention

In the present invention, when the audio device detects an error which causes a forced shutdown, the audio device switches the power supply source from the main power supply to the backup power supply, transmits an error report containing an error detail of the detected error, a model name of the audio device, and version information of installed software of the audio device to the wireless terminal, and then shuts down. When the wireless terminal receives the error report from the audio device, the wireless terminal transfers the error report to the solution providing server, receives a solution from the solution providing server, and presents the solution to the user. When the solution providing server receives the error report from the wireless terminal, the solution providing server finds a solution for the error detail contained in this error report from a table linked to the model name and the version information of the installed software contained in the error report, and transmits the solution to the wireless terminal. Therefore, according to the present invention, an appropriate solution to an error which involves a forced shutdown of the audio device can be suggested to a user that takes into account the model name of the audio device and the version information of the installed software of the audio device.

### Brief Description of Drawings

FIG. 1 is a schematic configuration diagram of an audio system according to one embodiment of the present invention.
FIG. 2 is a sequence diagram for illustrating operation performed when an error involving a forced shutdown of a wireless speaker (1) of the audio system according to the one embodiment of the present invention occurs.
FIG. 3 is a schematic functional configuration diagram of the wireless speaker (1).
FIG. 4 is a flow chart for illustrating a forced shutdown operation of the wireless speaker (1).
FIG. 5 is a schematic functional configuration diagram of a wireless terminal (2).
FIG. 6 is a flow chart for illustrating a solution suggestion operation of the wireless terminal (2).
FIG. 7 is a schematic functional configuration diagram of a solution providing server (4).
FIG. 8 is a table for schematically showing an example of registered details in a solution storage unit (401).
FIG. 9 is a table for schematically showing an example of registered details in an implementation result report storage unit (402).
FIG. 10 is a flow chart for illustrating a solution provision operation of the solution providing server (4).

### Description of Embodiments

Now, one embodiment of the present invention is described.

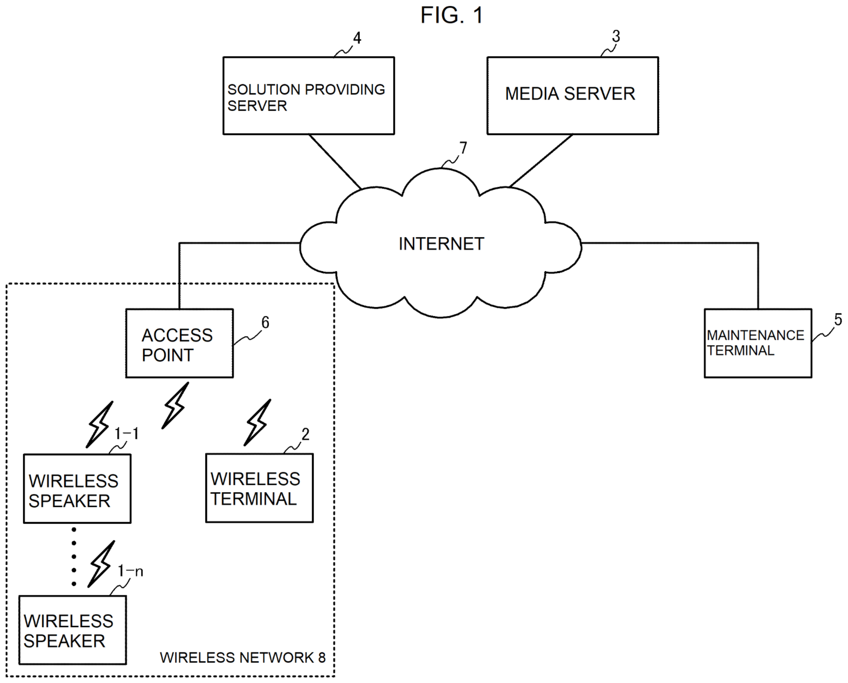

FIG. 1 is a schematic configuration diagram of an audio system according to this embodiment.

As illustrated in the figure, the audio system according to this embodiment includes a plurality of wireless speakers 1-1 to 1-n (hereinafter also simply referred to as "wireless speaker 1"), a wireless terminal 2 which functions as a remote controller for the wireless speakers 1-1 to 1-n, a media server 3 which distributes audio data, a solution providing server 4 which provides a solution to an error with the wireless speaker 1, and a maintenance terminal 5 which maintains and manages the solution providing server 4, including updating the solutions.

The wireless speakers 1-1 to 1-n and the wireless terminal 2 belong to a wireless network 8, and the wireless network 8 is connected to Internet 7 via an access point 6. The media server 3, the solution providing server 4, and the maintenance terminal 5 are also connected to the Internet 7.

The wireless speaker 1 receives audio data distributed from the media server 3 via the wireless terminal 2, and reproduces and outputs the data. The wireless speaker 1 also monitors for the occurrence of errors, and when the wireless speaker 1 detects an error which causes a forced shutdown, the wireless speaker 1 switches a power supply source from a main power supply to a backup power supply, transmits to the wireless terminal 2 an error report which contains an error detail of the detected error, a model name of the wireless speaker 1, and version information of installed software of the wireless speaker 1, and then shuts down.

The wireless terminal 2 downloads audio data from the media server 3, and distributes the audio data simultaneously to the wireless speakers 1-1 to 1-n. As a result, the wireless speakers 1-1 to 1-n can reproduce the audio data as a group. Further, when the wireless terminal 2 receives an error report from a wireless speaker 1, the wireless terminal 2 transfers the received error report to the solution providing server 4. When the wireless terminal 2 receives a solution from the solution providing server 4, the wireless terminal 2 displays the solution. Then, when the wireless terminal 2 receives an implementation result of the displayed solution ("resolved" or "not resolved") from a user, the wireless terminal 2 transmits an implementation result report containing the implementation result of this solution to the solution providing server 4.

The solution providing server 4 stores a table in which one or more solutions for each anticipated error detail are registered together with an application order (hereinafter referred to as "priority") of each of the one or more solutions for each model name and piece of version information of installed software of the wireless speaker 1. When an error report is received from the wireless terminal 2, the solution providing server 4 finds a solution for the error detail contained in the error report based on the priority from the table linked to the model name and the version information of the installed software of the wireless speaker 1 contained in the error report, and transmits the found solution to the wireless terminal 2. Then, when the solution providing server 4 receives the implementation result of this solution from the wireless terminal 2, the solution providing server 4 registers the implementation result of the solution linked to the error detail, the model name of the wireless speaker 1, and the version information of the installed software of the wireless speaker 1 contained in the error report, and when the implementation result of this solution is "not resolved" and the solution having the next highest priority after this solution is registered in the above-mentioned table as a solution for the error detail, transmits the solution having the next highest priority after this solution to the wireless terminal 2.

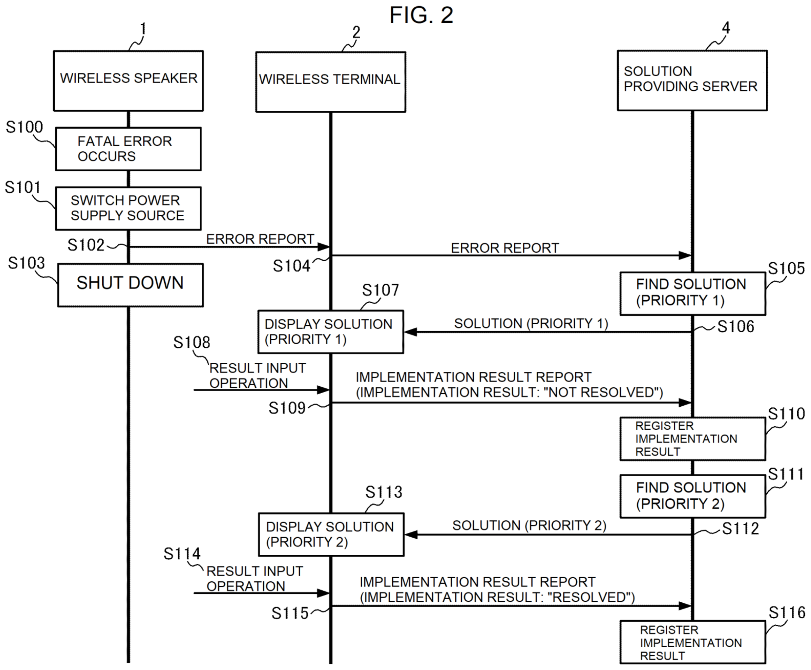

FIG. 2 is a sequence diagram for illustrating operation performed when an error involving a forced shutdown of the wireless speaker 1 of the audio system according to this embodiment occurs.

During operation, the wireless speaker 1 monitors for errors. It is assumed that an error (hereinafter referred to as "fatal error") involving a forced shutdown, for example, internal circuit failure, thermal runaway, freezing due to a bug in the installed software (for example, firmware, driver program, or application program), or overflow of audio data received from the media server 3 via the wireless terminal 2 has occurred, and that the wireless speaker 1 has detected that this error has occurred (Step S100).

The wireless speaker 1 switches the power supply source from the main power supply to the backup power supply (Step S101). Then, the wireless speaker 1 transmits an error report containing the error detail of the fatal error that has occurred, the model name of the wireless speaker 1, and the version information of the installed software of the wireless speaker 1 to the wireless terminal 2 (Step S102), and then shuts down the wireless speaker 1 (Step S103).

When the wireless terminal 2 receives the error report from the wireless speaker 1, the wireless terminal 2 transfers the error report to the solution providing server 4 (Step S104).

When the solution providing server 4 receives the error report from the wireless terminal 2, the solution providing server 4 identifies one or more solutions for the error detail contained in this error report from the stored table linked to the model name and the version information of the installed software of the wireless speaker 1 contained in the error report, and finds the solution having the highest priority (priority 1) from among the identified solutions (Step S105). Then, the solution providing server 4 transmits the found solution (priority 1) to the wireless terminal 2 (Step S106).

In response thereto, the wireless terminal 2 displays the solution (priority 1) received from the solution providing server 4 (Step S107), and prompts the user to implement the solution (priority 1) being displayed for the wireless speaker 1 that has been forcibly shut down. The wireless terminal 2 then waits for the user to input the implementation result of the solution (priority 1) ("resolved" or "not resolved").

Next, when the wireless terminal 2 receives an input operation of inputting the implementation result of the solution (priority 1) (Step S108), the wireless terminal 2 transmits an implementation result report containing the implementation result of this solution (priority 1) to the solution providing server 4 (Step S109). Here, it is assumed that the implementation result of the solution (priority 1) input by the user is "not resolved," and the implementation result report containing this implementation result "not resolved" is transmitted to the solution providing server 4.

Next, when the solution providing server 4 receives the implementation result report from the wireless terminal 2, the solution providing server 4 registers the implementation result of the solution (priority 1) contained in this implementation result report by linking the implementation result to the information contained in the error report received from the wireless terminal 2 (model name of the wireless speaker 1, version information of the installed software of the wireless speaker 1, and error detail) and the solution (priority 1) transmitted to the wireless terminal 2 (Step S110).

The solution providing server 4 finds the solution having the next highest priority (priority 2) from among the one or more solutions identified in Step S105 after the solution (priority 1) transmitted to the wireless terminal 2 in Step S106 (Step S111). When a corresponding solution (priority 2) has successfully been found, the solution providing server 4 transmits this solution (priority 2) to the wireless terminal 2 (Step S112).

In response thereto, the wireless terminal 2 displays the solution (priority 2) received from the solution providing server 4 (Step S113), and prompts the user to implement the solution (priority 2) being displayed for the wireless speaker 1 that has been forcibly shut down. The wireless terminal 2 then waits for the user to input the implementation result of the solution (priority 2) ("resolved" or "not resolved").

When the wireless terminal 2 receives an input operation of inputting the implementation result of the solution (priority 2) (Step S114), the wireless terminal 2 transmits an implementation result report containing the implementation result of this solution (priority 2) to the solution providing server 4 (Step S115). Here, it is assumed that the implementation result of the solution (priority 2) input by the user is "resolved," and the implementation result report containing this implementation result "resolved" is transmitted to the solution providing server 4.

When the solution providing server 4 receives the implementation result report from the wireless terminal 2, the solution providing server 4 registers the implementation result of the solution (priority 2) contained in this implementation result report by linking the implementation result to the information contained in the error report received from the wireless terminal 2 (model name of the wireless speaker 1, version information of the installed software of the wireless speaker 1, and error detail) and the solution (priority 2) transmitted to the wireless terminal 2 (Step S116). Then, the solution providing server 4 ends the processing.

Next, the wireless speaker 1, the wireless terminal 2, and the solution providing server 4 that form the audio system according to this embodiment are described in detail.

A detailed description of the media server 3 is omitted here because an existing media server which distributes audio data specified in a received distribution request to the sender of the distribution request can be used as the media server 3. In addition, a detailed description of the maintenance terminal 5 is also omitted because an existing maintenance terminal (network terminal) which is capable of accessing the solution providing server 4 and viewing, registering, and updating various types of information registered in the solution providing server 4 can be used as the maintenance terminal 5.

First, the wireless speaker 1 is described.

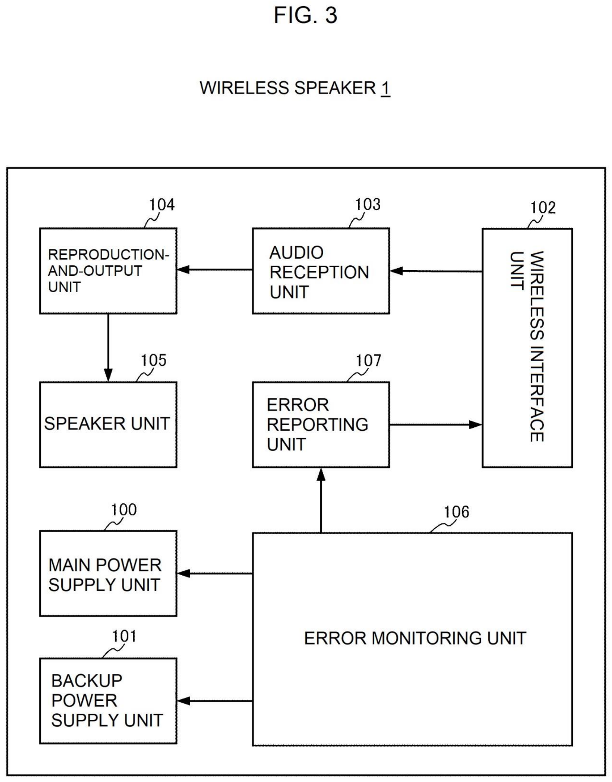

FIG. 3 is a schematic functional configuration diagram of the wireless speaker 1.

As illustrated in the figure, the wireless speaker 1 includes a main power supply unit 100, a backup power supply unit 101, a wireless interface unit 102, an audio reception unit 103, a reproduction-and-output unit 104, a speaker unit 105, an error monitoring unit 106, and an error reporting unit 107.

The main power supply unit 100 supplies electric power supplied from an external power supply to each of the units 101 to 106.

The backup power supply unit 101 is, for example, a storage battery, and when the power supply by the main power supply unit 100 is cut off, the backup power supply unit 101 supplies electric power to at least the wireless interface unit 102, the error monitoring unit 106, and the error reporting unit 107.

The wireless interface unit 102 is an interface for establishing connection to the access point 6.

The audio reception unit 103 receives audio data distributed from the media server 3 via the wireless terminal 2.

The reproduction-and-output unit 104 reproduces and outputs the audio data received by the audio reception unit 103.

The speaker unit 105 outputs, as a sound, the reproduced data output from the reproduction-and-output unit 104.

The error monitoring unit 106 monitors for fatal errors with the wireless speaker 1. When a fatal error is detected, the error monitoring unit 106 switches the power supply source of the wireless speaker 1 from the main power supply unit 100 to the backup power supply unit 101, notifies the error reporting unit 107 of an error code of the detected fatal error, and shuts down the wireless speaker 1 after the error reporting unit 107 has completed reporting the error, as described below.

When the error reporting unit 107 receives the error code of the fatal error from the error monitoring unit 106, the error reporting unit 107 transmits an error report containing this error code, the model name of the own wireless speaker 1, and the version information of the installed software of the own wireless speaker 1 to the wireless terminal 2.

The functional configuration of the wireless speaker 1 illustrated in FIG. 3 may be implemented by hardware through use of an integrated logic IC such as an application specific integrated circuit (ASIC) or a field programmable gate array (FPGA), or may be implemented by software through use of a computer such as a digital signal processor (DSP). As another example, the functional configuration may be implemented as a process on a general-purpose computer, such as a personal computer (PC), including a central processing unit (CPU), a memory, an auxiliary storage device such as a flash memory or a hard disk drive, and a wireless communication device such as a wireless LAN adapter, by the CPU loading a predetermined program into the memory from the auxiliary storage device and executing the program.

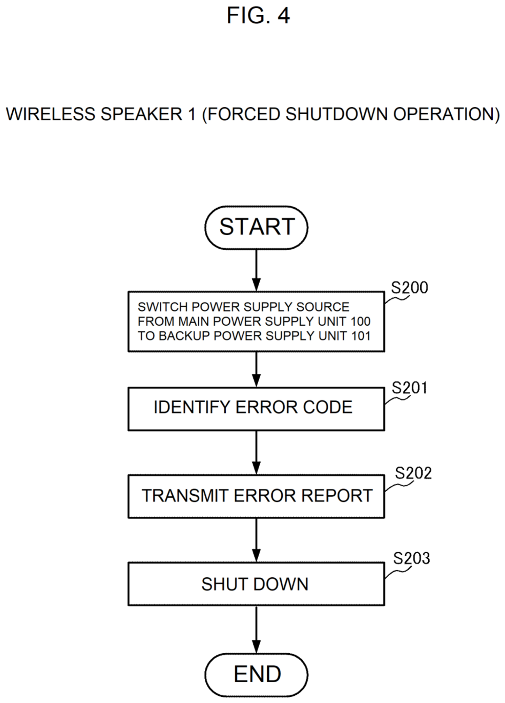

FIG. 4 is a flow chart for illustrating a forced shutdown operation of the wireless speaker 1.

This flow is started when a fatal error occurs in the wireless speaker 1 and the fatal error is detected by the error monitoring unit 106.

First, the error monitoring unit 106 switches the power supply source of the wireless speaker 1 from the main power supply unit 100 to the backup power supply unit 101 (Step S200). As a result, at least the wireless interface unit 102, the error monitoring unit 106, and the error reporting unit 107 can continue operating without stopping.

Next, the error monitoring unit 106 identifies an error code corresponding to the detail of the detected fatal error (for example, internal circuit failure, thermal runaway, freezing due to a bug in the installed software, or overflow of audio data received from the media server 3 via the wireless terminal 2) (Step S201), and notifies the error reporting unit 107 of the identified error code.

In response thereto, the error reporting unit 107 transmits an error report containing the error code received from the error monitoring unit 106, the model name of the own wireless speaker 1, and the version information of the installed software of the own wireless speaker 1 to the wireless terminal 2 via the wireless interface unit 102 (Step S202).

Next, when the error reporting unit 107 has completed reporting the error to the wireless terminal 2, the error monitoring unit 106 shuts down the own wireless speaker 1 and stops the power supply by the backup power supply unit 101 (Step S203).

Next, description is given of the wireless terminal 2.

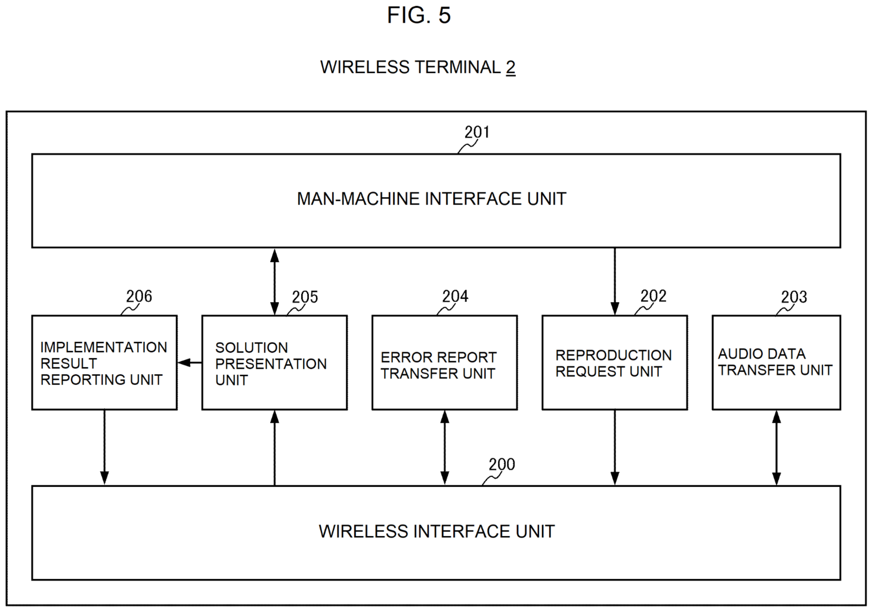

FIG. 5 is a schematic functional configuration diagram of the wireless terminal 2.

As illustrated in the figure, the wireless terminal 2 includes a wireless interface unit 200, a man-machine interface unit 201, a reproduction request unit 202, an audio data transfer unit 203, an error report transfer unit 204, a solution presentation unit 205, and an implementation result reporting unit 206.

The wireless interface unit 200 is an interface for establishing connection to the access point 6.

The man-machine interface unit 201 is an interface for displaying information to the user and for receiving various operations from the user, and includes, for example, an input/output device such as a display with a touch sensor.

The reproduction request unit 202 transmits, in accordance with a tune selection operation received from the user via the man-machine interface unit 201, a reproduction request involving specification of a tune received in this tune selection operation to the media server 3 via the wireless interface unit 200.

The audio data transfer unit 203 simultaneously transfers the audio data of the tune received from the media server 3 via the wireless interface unit 200 to the wireless speakers 1-1 to 1-n.

When the error report transfer unit 204 receives an error report from the wireless speaker 1 via the wireless interface unit 200, the error report transfer unit 204 transfers this error report to the solution providing server 4 via the wireless interface unit 200.

When the solution presentation unit 205 receives a solution from the solution providing server 4 via the wireless interface unit 200, the solution presentation unit 205 displays this solution on the man-machine interface unit 201.

When the man-machine interface unit 201 receives an implementation result from the user regarding the solution being displayed, the implementation result reporting unit 206 transmits an implementation result report containing this implementation result to the solution providing server 4 via the wireless interface unit 200.

In the same manner as the functional configuration of the wireless speaker 1 illustrated in FIG. 3, the functional configuration of the wireless terminal 2 illustrated in FIG. 5 may be implemented by hardware through use of an integrated logic IC such as an ASIC or an FPGA, or may be implemented by software through use of a computer such as a DSP. As another example, the functional configuration may be implemented as a process on a portable computer, such as a smartphone or a tablet PC, including a CPU, a memory, an auxiliary storage device such as a flash memory, and a wireless communication device such as a wireless LAN adapter, by the CPU loading a predetermined program into the memory from the auxiliary storage device and executing the program.

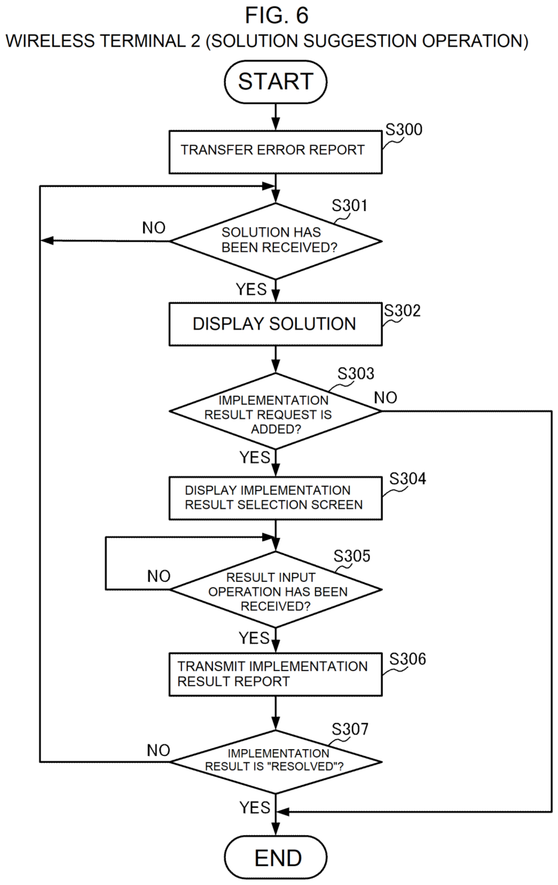

FIG. 6 is a flow chart for illustrating a solution suggestion operation of the wireless terminal 2.

This flow is started when the error report transfer unit 204 receives an error report from the wireless speaker 1 via the wireless interface unit 200.

First, the error report transfer unit 204 transfers the error report received from the wireless speaker 1 to the solution providing server 4 via the wireless interface unit 200 (Step S300). Then, the solution presentation unit 205 waits for a solution to be sent from the solution providing server 4 via the wireless interface unit 200 (Step S301).

When the solution presentation unit 205 receives a solution from the solution providing server 4 via the wireless interface unit 200 ("YES" in Step S301), the solution presentation unit 205 displays this solution on the man-machine interface unit 201 (Step S302), and prompts the user to implement the solution. Here, the solution presentation unit 205 determines whether or not an implementation result request is added to the received solution (Step S303). When an implementation result request is not added ("NO" in Step S303), this flow ends.

Meanwhile, when an implementation result request is added ("YES" in Step S303), the solution presentation unit 205 displays an implementation result selection screen (a dialog box for selecting "resolved" or "not resolved") on the man-machine interface unit 201 together with the solution being displayed (Step S304). When the solution presentation unit 205 receives an input operation of inputting the implementation result from the user via the implementation result selection screen displayed on the man-machine interface unit 201 ("YES" in Step S305), the solution presentation unit 205 notifies the implementation result reporting unit 206 of the implementation result received by this input operation (any one of "resolved" and "not resolved"). In response thereto, the implementation result reporting unit 206 transmits an implementation result report containing the implementation result to the solution providing server 4 via the wireless interface unit 200 (Step S306).

Next, when the implementation result received by the input operation is "not resolved" ("NO" in Step S307), the process returns to Step S301, and the solution presentation unit 205 waits for a new solution to be sent from the solution providing server 4. When the implementation result is "resolved" ("YES" in Step S307), this flow ends.

Next, the solution providing server 4 is described.

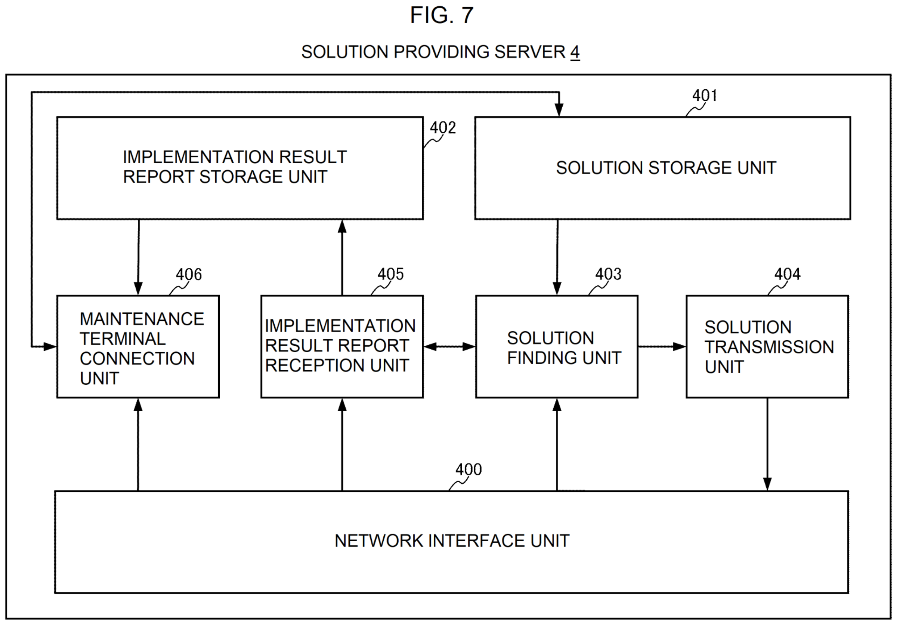

FIG. 7 is a schematic functional configuration diagram of the solution providing server 4.

As illustrated in the figure, the solution providing server 4 includes a network interface unit 400, a solution storage unit 401, an implementation result report storage unit 402, a solution finding unit 403, a solution transmission unit 404, an implementation result report reception unit 405, and a maintenance terminal connection unit 406.

The network interface unit 400 is an interface for establishing connection to the Internet 7.

The solution storage unit 401 stores one or more solutions to each anticipated error detail for each model name and installed software version of the wireless speaker 1.

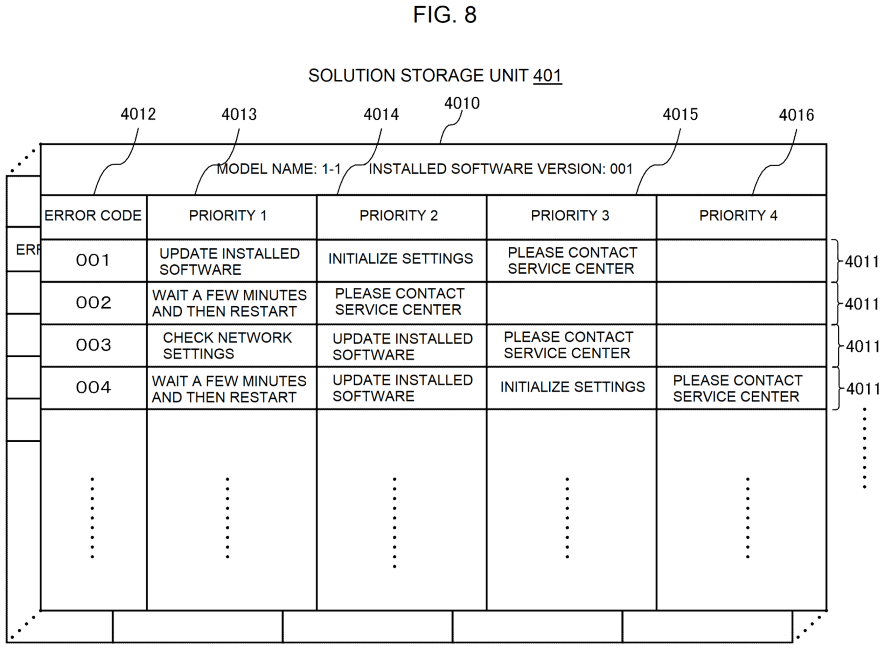

FIG. 8 is a table for schematically showing an example of registered details in the solution storage unit 401.

As shown in the figure, the solution storage unit 401 stores a table 4010 in which one or more solutions for each anticipated error detail are registered for each model name and installed software version of the wireless speaker 1. The table 4010 stores a solution record 4011 for each anticipated error detail. The solution record 4011 has a field 4012 in which an error code, which is identification information on the error detail, is registered, a field 4013 in which a solution having priority 1 is registered, a field 4014 in which a solution having priority 2 following priority 1 is registered when there is a solution having priority 2, a field 4015 in which a solution having priority 3 following priority 2 is registered when there is a solution having priority 3, and a field 4016 in which a solution having priority 4 following priority 3 is registered when there is a solution having priority 4. In this example, solutions having priority up to 4 are anticipated as solutions for the error detail, but fields may be added to the solution record 4011 so that solutions having priority of 5 or higher can be registered.

The implementation result report storage unit 402 stores implementation result reports of solutions reported from the wireless speaker 1.

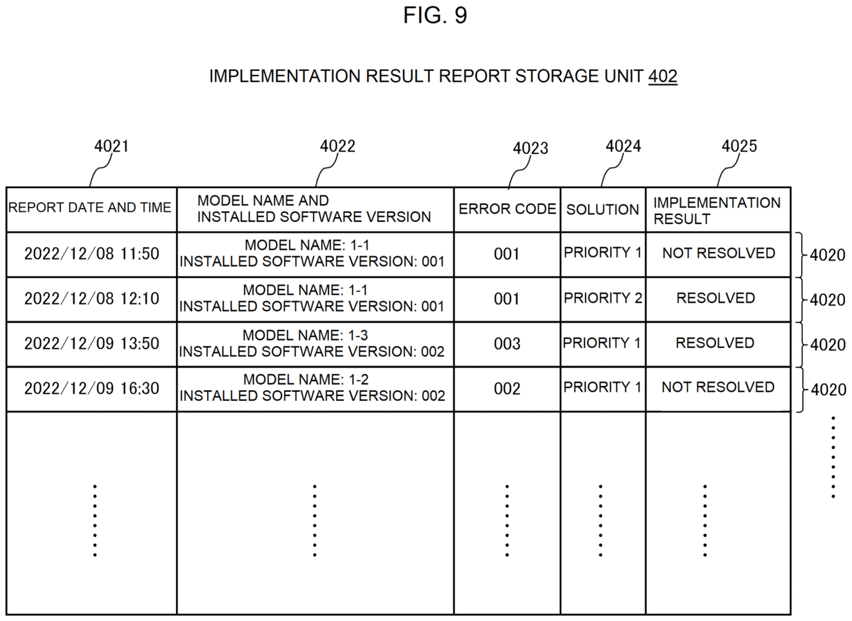

FIG. 9 is a table for schematically showing an example of registered details in the implementation result report storage unit 402.

As shown in the figure, an implementation result report record 4020 for a solution is registered in the implementation result report storage unit 402 for each implementation result report reported from the wireless speaker 1. The implementation result report record 4020 has a field 4021 for registering the report date and time, a field 4022 for registering the model name and the version information of the installed software of the wireless speaker 1, a field 4023 for registering an error code, a field 4024 for registering the priority of the solution, and a field 4025 for registering the implementation result of the solution.

When the solution finding unit 403 receives the error report from the wireless terminal 2 via the network interface unit 400, the solution finding unit 403 finds, based on priority, a solution included in the record 4011 including the error code contained in this error report from the table 4010 stored in the solution storage unit 401 linked to the model name and the version information of the installed software of the wireless speaker 1 contained in the error report. Further, the solution finding unit 403 determines whether or not the found solution is the last solution (solution having the lowest priority among the records 4011). When the found solution is not the last solution, an implementation result request is added to the found solution, and this solution is then notified to the solution transmission unit 404. Meanwhile, when the found solution is the last solution, the found solution is notified to the solution transmission unit 404 without adding an implementation result request.

Further, when the solution finding unit 403 receives an implementation result report containing the implementation result "not resolved" from the wireless terminal 2 for a solution having an attached implementation result request notified to the solution transmission unit 404, the solution finding unit 403 finds the solution having the next highest priority after this solution from the record 4011 including this solution. Further, the solution finding unit 403 determines whether or not the found solution is the last solution (solution having the lowest priority among the records 4011). When the found solution is not the last solution, an implementation result request is added to the found solution, and this solution is then notified to the solution transmission unit 404. Meanwhile, when the found solution is the last solution, the found solution is notified to the solution transmission unit 404 without adding an implementation result request.

The solution transmission unit 404 transmits the solution notified by the solution finding unit 403 or the solution having an attached implementation result request to the wireless terminal 2 via the network interface unit 400.

The implementation result report reception unit 405 receives the implementation result of the solution having an attached implementation result request transmitted by the solution transmission unit 404 to the wireless terminal 2. Then, the implementation result report reception unit 405 adds a record 4020 of the implementation result report to the implementation result report storage unit 402, and registers the received implementation result in the added record 4020 together with the date and time of reception, the priority of the implemented solution, and the information (model name of the wireless speaker 1, version information of the installed software of the wireless speaker 1, and error code) contained in the error report received by the solution finding unit 403 from the wireless terminal 2.

The maintenance terminal connection unit 406 connects to the maintenance terminal 5 via the network interface unit 400. Then, in accordance with a request from the maintenance terminal 5, the maintenance terminal connection unit 406 allows the maintenance terminal 5 to browse and register or update the details registered in the solution storage unit 401 and the implementation result report storage unit 402.

In the same manner as the functional configuration of the wireless speaker 1 illustrated in FIG. 3, the functional configuration of the solution providing server 4 illustrated in FIG. 7 may be implemented by hardware through use of an integrated logic IC such as an ASIC or an FPGA, or may be implemented by software through use of a computer such as a DSP. As another example, the functional configuration may be implemented as a process on a general-purpose computer, such as a PC, including a CPU, a memory, an auxiliary storage device such as a flash memory or a hard disk drive, and a communication device such as a network interface card (NIC), by the CPU loading a predetermined program into the memory from the auxiliary storage device and executing the program.

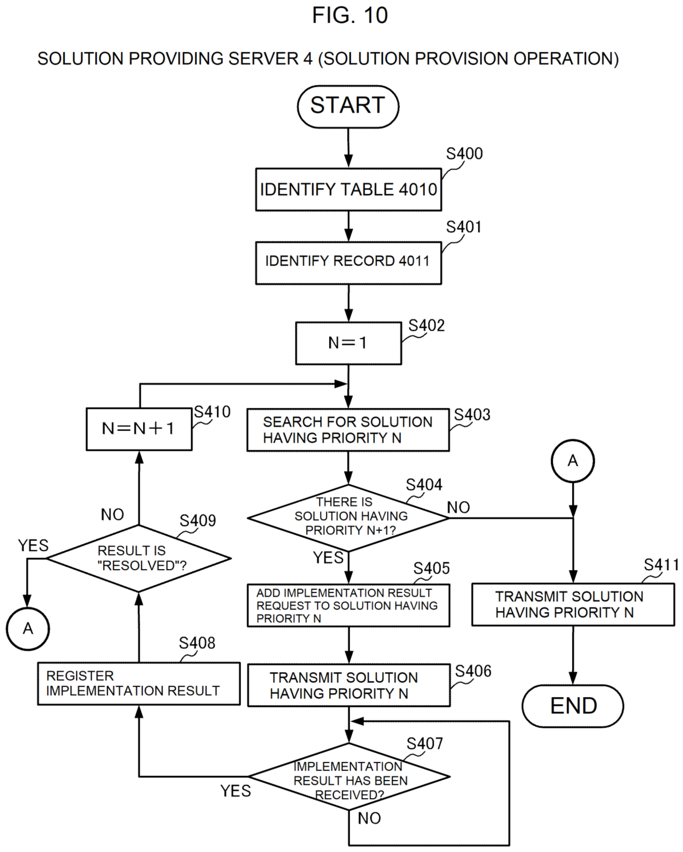

FIG. 10 is a flow chart for illustrating a solution provision operation of the solution providing server 4.

This flow is started when the solution finding unit 403 receives an error report from the wireless terminal 2 via the network interface unit 400.

First, the solution finding unit 403 refers to the solution storage unit 401, and identifies the table 4010 linked to the model name and the version information of installed software of the wireless speaker 1 contained in the error report received from the wireless terminal 2 (Step S400). Next, the solution finding unit 403 identifies from the identified table 4010 a record 4011 of the solution in which the error code contained in the error report received from the wireless terminal 2 is registered (Step S401).

Next, the solution finding unit 403 sets a counter value N to "1" (Step S402).

Then, the solution finding unit 403 searches for a solution having priority N from the identified record 4011 (Step S403). Next, the solution finding unit 403 checks whether or not a solution having priority N+1 is registered in the identified record 4011 (Step S404). When a solution having priority N+1 is not registered ("NO" in Step S404), that is, when the solution having priority N is the last solution "Please contact service center" (solution having the lowest priority among the solutions registered in the identified record 4011), the solution finding unit 403 notifies the solution transmission unit 404 of the solution having priority N. In response thereto, the solution transmission unit 404 transmits the solution having priority N to the wireless terminal 2 via the network interface unit 400 (Step S411), and ends this flow.

Meanwhile, when a solution having priority N+1 is registered ("YES" in Step S404), that is, when the solution having priority N is not the last solution "Please contact service center," the solution finding unit 403 adds an implementation result request to this solution having priority N (Step S405). The solution finding unit 403 then notifies the solution transmission unit 404 of the solution having priority N to which an implementation result request has been added. In response thereto, the solution transmission unit 404 transmits the solution having priority N to which an implementation result request has been added to the wireless terminal 2 via the network interface unit 400 (Step S406). Then, the implementation result report reception unit 405 waits for the implementation result report to be sent from the wireless terminal 2 via the network interface unit 400 (Step S407).

Then, when the implementation result report reception unit 405 receives the implementation result report from the wireless terminal 2 via the network interface unit 400 ("YES" in Step S407), the implementation result report reception unit 405 registers a new implementation result report record 4020 in the implementation result report storage unit 402. Then, the implementation result report reception unit 405 registers, in this implementation result report record 4020, the report date and time (date and time of reception) of the implementation result report, the implementation result contained in this implementation result report ("resolved" or "not resolved"), the model name and the version information of the installed software of the wireless speaker 1 linked to the table 4010 identified in Step S400, the error code registered in the record 4011 identified in Step S401, and the priority N of the solution transmitted to the wireless terminal 2 in Step S406 (Step S408).

Next, the implementation result report reception unit 405 notifies the solution finding unit 403 of the implementation result contained in the implementation result report. In response thereto, when the implementation result contained in this implementation result report is "resolved" ("YES" in Step S409), the solution finding unit 403 ends this flow. Meanwhile, when the implementation result contained in the implementation result report is "not resolved" ("NO" in Step S409), the counter value N is incremented by one (N=N+1) (Step S410), and the process returns to Step S403.

Description of the one embodiment of the present invention has been given above.

In this embodiment, when a wireless speaker 1 detects a fatal error which causes a forced shutdown, the wireless speaker 1 switches the power supply source from the main power supply unit 100 to the backup power supply unit 101, transmits an error report containing the error code of the detected error, the model name of the wireless speaker 1, and the version information of the installed software of the wireless speaker 1 to the wireless terminal 2, and then shuts down. When the wireless terminal 2 receives the error report from the wireless speaker 1, the wireless terminal 2 transfers the error report to the solution providing server 4, and receives and displays the solution from the solution providing server 4. When the solution providing server 4 receives the error report from the wireless terminal 2, the solution providing server 4 searches for the record 4011 in which the error code contained in this error report is registered from the table 4010 stored in the solution storage unit 401 linked to the model name and the version information of the installed software of the wireless speaker 1 contained in the error report, and transmits the solution registered in this record 4011 to the wireless terminal 2. Therefore, according to this embodiment, an appropriate solution to a fatal error which involves a forced shutdown of the wireless speaker 1 can be suggested to the user that takes into account the model name and the installed software version of the wireless speaker 1.

Further, in this embodiment, when an implementation result request is added to the solution received from the solution providing server 4, the wireless terminal 2 displays an implementation result selection screen together with the solution. Then, when the implementation result of the displayed solution is received from the user via this implementation result selection screen, the wireless terminal 2 transmits an implementation result report containing this implementation result to the solution providing server 4. Then, the solution providing server 4 stores the implementation result contained in the implementation result report received from the wireless terminal 2 together with the solution corresponding to this implementation result, the error code, the model name of the wireless speaker 1, and version information of the installed software of the wireless speaker 1 in the implementation result report storage unit 402. Therefore, according to this embodiment, the maintenance/management person of the solution providing server 4 can use the maintenance terminal 5 to refer to the implementation result report storage unit 402 of the solution providing server 4 to confirm the effect of the solution on the error.

Further, in this embodiment, the solution providing server 4 stores, in each table 4010 stored in the solution storage unit 401 linked to the model name and the version information of the installed software of the wireless speaker 1, for each anticipated error, a record 4011 in which one or more solutions are registered together with the priority of each of the one or more solutions. Further, in a case in which the implementation result of the solution contained in the implementation result report received from the wireless terminal 2 is "not resolved," when a solution having the next highest priority after this solution exists in the record 4011 in which this solution is found, the solution providing server 4 transmits the solution having the next highest priority to the wireless terminal 2. Therefore, according to this embodiment, one or more appropriate solutions can be suggested to the user in order of priority until the implementation result is "resolved" or until all solutions are exhausted, thereby improving user convenience.

The present invention is not limited to the embodiment described above, and various modifications can be made thereto within the scope of the gist of the present invention.

For example, in the embodiment described above, the wireless terminal 2 receives a solution from the solution providing server 4 and displays the received solution on the man-machine interface unit 201, but the present invention is not limited to this. The solution received from the solution providing server 4 may be converted into audio data, or audio data of the solution may be received from the solution providing server 4 and output as a sound from the man-machine interface unit 201. Further, audio data of the solution may be simultaneously distributed to wireless speakers 1 other than the source of the error report, or may be distributed to any one wireless speaker 1 other than the source of the error report, and the solution may be output as a sound from the wireless speaker 1 to which the audio data has been distributed.

Further, in the embodiment described above, the solution providing server 4 may be integrated with the media server 3.

Further, in the embodiment described above, as an example, description is given of the wireless speaker 1 that transmits an error report to the wireless terminal 2 when a fatal error which causes a forced shutdown is detected. However, the present invention is widely applicable to audio devices that transmit an error report to the wireless terminal 2 when a fatal error which causes a forced shutdown is detected.

Further, in the embodiment described above, as an example, description is given of the wireless speaker 1 connected to the Internet 7 via the access point 6 as an audio device that transmits an error report to the wireless terminal 2 when a fatal error which causes a forced shutdown is detected. However, the present invention is not limited to this. The audio device may be any device that is wirelessly connected to the wireless terminal 2.

### Reference Signs List

1-1 to 1-n, 1: wireless speaker 2: wireless terminal
3: media server 4: solution providing server 5: maintenance terminal
6: access point 7: Internet
8: wireless network 100: main power supply unit
101: backup power supply unit 102: wireless interface unit
103: audio reception unit 104: reproduction-and-output unit
105: speaker unit 106: error monitoring unit
107: error reporting unit 200: wireless interface unit
201: man-machine interface unit 202: reproduction request unit
203: audio data transfer unit 204: error report transfer unit
205: solution presentation unit 206: implementation result reporting unit
400: network interface unit
401: solution storage unit 402: implementation result report storage unit
403: solution finding unit 404: solution transmission unit
405: implementation result report reception unit 406: maintenance terminal connection unit

## Claims

1. An audio system, comprising:
an audio device;
a wireless terminal configured to function as a remote controller for the audio device; and
a solution providing server configured to provide a solution to an error with the audio device,
wherein the audio device includes:
a main power supply;
a backup power supply;
error monitoring means for monitoring for an error which causes a forced shutdown of the audio device; and
error reporting means for transmitting, when the error is detected by the error monitoring means, an error report containing an error detail of the error, a model name of the audio device, and version information of installed software of the audio device to the wireless terminal,
wherein the error monitoring means is configured to switch, when the error is detected, a power supply source of the audio device from the main power supply to the backup power supply, to notify the error reporting means of the error detail of the error, and shut down the audio device after transmission of the error report by the error reporting means is complete,
wherein the wireless terminal includes:
error report transfer means for transferring the error report to the solution providing server when the error report is received from the audio device; and
solution presentation means for presenting, when a solution is received from the solution providing server, the solution, and
wherein the solution providing server includes:
solution storage means for storing a table that stores, for each model name and installed software version of the audio device, a solution to each anticipated error detail;
solution finding means for finding, when the error report is received from the wireless terminal, the solution for the error detail contained in the error report from the table which is stored in the solution storage means linked to the model name and the version of the installed software contained in the error report; and
solution transmission means for transmitting the solution found by the solution finding means to the wireless terminal.

2. The audio system according to claim 1,
wherein the wireless terminal further includes implementation result reporting means for receiving from a user an implementation result of the solution presented by the solution presentation means and transmitting an implementation result report containing the implementation result to the solution providing server, and
wherein the solution providing server further includes implementation result report storage means for storing the implementation result report received from the wireless terminal.

3. The audio system according to claim 2,
wherein the table stores one or more solutions to each anticipated error detail together with a priority of each of the one or more solutions, and
wherein the solution finding means is configured to find, when the implementation result for the solution contained in the implementation result report received from the wireless terminal is "not resolved" and a solution having the next highest priority after the solution which is a subject of the implementation result exists in the table which is stored in the solution storage means linked to the model name and the version of the installed software contained in the error report, the solution from the table.

4. An audio device comprising:
a main power supply;
a backup power supply;
error monitoring means for monitoring for an error which causes a forced shutdown of the audio device; and
error reporting means for transmitting, when the error is detected by the error monitoring means, an error report containing an error detail of the error, a model name of the audio device, and version information of installed software of the audio device to a wireless terminal configured to function as a remote controller for the audio device,
wherein the error monitoring means is configured to switch, when the error is detected, a power supply source of the audio device from the main power supply to the backup power supply, to notify the error reporting means of the error detail of the error, and shut down the audio device after reporting of the error by the error reporting means is complete.

5. A wireless terminal configured to function as a remote controller for an audio device, the wireless terminal comprising:
error report transfer means for transferring, when an error report containing an error detail of an error which causes a forced shutdown of the audio device, a model name of the audio device, and version information of installed software of the audio device is received from the audio device, the error report to a solution providing server configured to provide a solution to an error with the audio device; and
solution presentation means for presenting the solution when the solution is received from the solution providing server.

6. A solution providing server configured to provide a solution to an error with an audio device, the solution providing server comprising:
solution storage means for storing a table that stores, for each model name and piece of version information of installed software of the audio device, a solution to each anticipated error detail;
solution finding means for finding, when an error report containing an error detail of an error which causes a forced shutdown of the audio device, a model name of the audio device, and version information of installed software of the audio device is received from a wireless terminal configured to function as a remote controller for the audio device, the solution for the error detail contained in the error report from the table which is stored in the solution storage means linked to the model name and the version information of installed software contained in the error report; and
solution transmission means for transmitting the solution found by the solution finding means to the wireless terminal.

7. A program for causing a computer to function as an audio device,
the audio device including:
a main power supply; and
a backup power supply,
the program causing the computer to function as:
error monitoring means for monitoring for an error which causes a forced shutdown of the audio device; and
error reporting means for transmitting, when the error is detected by the error monitoring means, an error report containing an error detail of the error, a model name of the audio device, and version information of installed software of the audio device to a wireless terminal configured to function as a remote controller for the audio device,
the error monitoring means being configured to switch, when the error is detected, a power supply source of the audio device from the main power supply to the backup power supply, to notify the error reporting means of the error detail of the error, and shut down the audio device after transmission of the error report by the error reporting means is complete.

8. A program for causing a computer to function as a remote controller for an audio device, the program causing the computer to function as:
error report transfer means for transferring, when an error report containing an error detail of an error which causes a forced shutdown of the audio device, a model name of the audio device, and version information of installed software of the audio device is received from the audio device, the error report to a solution providing server configured to provide a solution to an error with the audio device; and
solution presentation means for presenting the solution when the solution is received from the solution providing server.

9. A program for causing a computer to function as a solution providing server configured to provide a solution to an error with an audio device, the program causing the computer to function as:
solution storage means for storing a table that stores, for each model name and piece of version information of installed software of the audio device, a solution to each anticipated error detail;
solution finding means for finding, when an error report containing an error detail of an error which causes a forced shutdown of the audio device, a model name of the audio device, and version information of installed software of the audio device is received from a wireless terminal configured to function as a remote controller for the audio device, the solution for the error detail contained in the error report from the table which is stored in the solution storage means linked to the model name and the version of the installed software contained in the error report; and
solution transmission means for transmitting the solution found by the solution finding means to the wireless terminal.

10. A solution suggestion method for an error with an audio device, the solution suggestion method comprising:
monitoring, by the audio device, for an error which causes a forced shutdown of the audio device;
switching, by the audio device, when the error is detected, a power supply source of the audio device from a main power source to a backup power source, transmitting an error report containing an error detail of the error, a model name of the audio device, and version information of installed software of the audio device to a wireless terminal configured to function as a remote controller for the audio device, and then shutting down the audio device;
transferring, by the wireless terminal, when the error report is received from the audio device, the error report to a solution providing server configured to provide a solution to an error with the audio device, receiving the solution from the solution providing server, and presenting the received solution;
storing, by the solution providing server, a table that stores, for each model name and piece of version information of installed software of the audio device, a solution to each anticipated error detail; and
finding, by the solution providing server, when the error report is received from the wireless terminal, the solution for the error detail contained in the error report from the stored table linked to the model name and the version information of the installed software contained in the error report, and transmitting the found solution to the wireless terminal.
